# EUROPEAN PATENT SPECIFICATION

(11) **EP 0 368 609 B1**
(45) Date of publication and mention of the grant of the patent: **16.03.1994**
(21) Application number: 89311501.4
(22) Date of filing: 07.11.1989
(51) Int. Cl.: G09F 9/00, B64D 11/06

(54) **Apparatus for attaching a display monitor to a seat**
Befestigungsvorrichtung für einen Anzeigemonitor an einem Stuhl
Dispositif de fixation d'un moniteur d'affichage à un siège

(30) Priority: 08.11.1988 JP 145868/88 U
(43) Date of publication of application: 16.05.1990
(73) Proprietor: SONY CORPORATION, Tokyo 141 (JP); TENRYU INDUSTRIES CO. LTD., Kakamigahara-shi Gifu (JP)
(72) Inventor: Shichijo, Hajime Patents Division, Tokyo 141 (JP); Kimura, Toshio Patents Division, Tokyo 141 (JP); Kaji, Masato, Kakamigahara-shi Gifu (JP)
(74) Representative: Thomas, Christopher Hugo

(56) References cited:
- EP-A- 0 230 280
- DE-A- 3 530 654

## Description

This invention relates to apparatus for attaching a display monitor to a seat. Such apparatus is suitable for application to passenger seats in aircraft, railway coaches and buses to enable passengers to watch video programmes on the display monitor.

Recently, low-power display apparatus such as liquid crystal television monitors have been mass-produced, thus becoming less expensive. This has promoted the development of a seat apparatus for attaching a display monitor to passenger seats in aircraft, railway coaches and buses, so that the individual passengers can view video programmes.

Previously proposed seat apparatus for attaching a display monitor may be roughly classified into two types wherein: (A) a display monitor is attached to the seat back of the passenger seat just in front of the passenger who wants to watch a video programme such as can be seen from EP-A-0 230 280; and (B) a display monitor is mounted inside an armrest of each passenger seat.

With type A, when the seatback is reclined, the display monitor becomes difficult to see, because the distance between the passenger and the display monitor is increased by the reclining amount of the seatback. Moreover the distance between control switches and the display monitor is also increased and the interconnection therebetween is made complicated.

With type B, the space in the armrest for other apparatus such as a tray for meals, an ashtray and various control switches is restricted.

According to the present invention there is provided a seat apparatus for attaching a display to a seat having a reclinable seatback, the apparatus comprising:
an arm having first and second ends and being pivotally fixed at the first end to the seatback;
display means;
pivot means for attaching the display means to second end of the arm; and
a recess in the seatback for stowing the display means.

According to the present invention there is provided a seat apparatus for attaching a display to a pair of side-by-side reclining seats each having a seatback such that one side of one seatback opposes a side of the other seatback, the apparatus comprising:
a pair of arms each having first and second ends with the first ends being pivotally fixed to the opposing sides of the seatbacks respectively;
a pair of display means respectively attached to the second ends of the pair of arms; and
a pair of recesses formed in the opposing sides of the seatbacks respectively, for stowing the displays when not in use.

The invention will now be described by way of example with reference to the accompanying drawings, throughout which like parts are referred to by like references, and in which:
Figure 1 is a perspective view of a first embodiment of seat apparatus according to the present invention;
Figures 2A to 2C are enlarged, perspective views of part of the first embodiment, seen along the direction of an arrow II in Figure 1;
Figure 3 is fragmentary, pictorial side view of the first embodiment;
Figure 4 is a perspective view of a second embodiment of seat apparatus according to the present invention;
Figures 5A to 5C are enlarged, perspective views of part of the second embodiment seen along the direction of an arrow V in Figure 4;
Figure 6 is a perspective view of a third embodiment of apparatus according to the present invention; and
Figure 7 is a schematic plan view of the third embodiment.

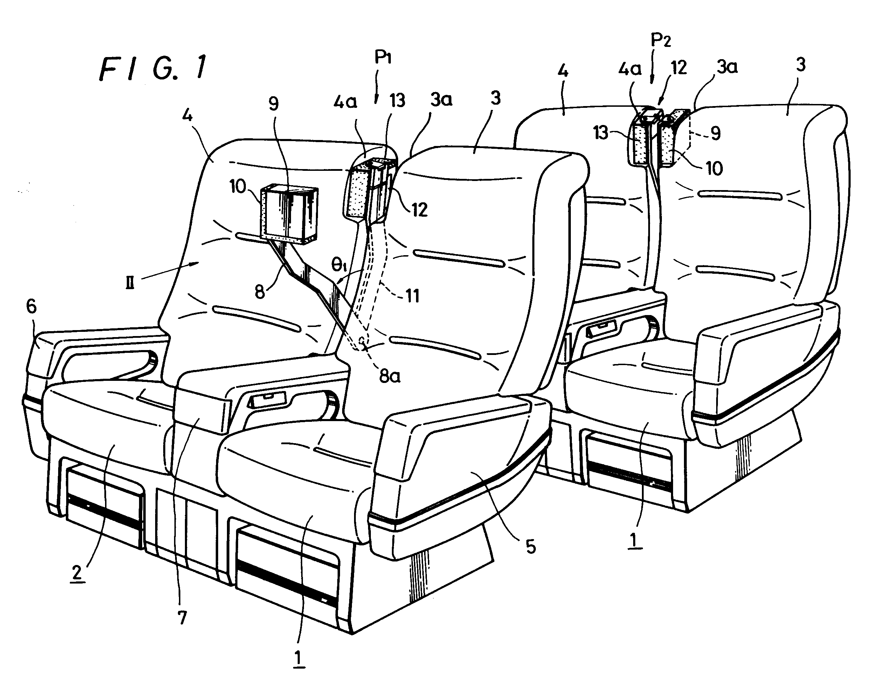

Referring first to Figure 1, in the first embodiment a pair of seat apparatuses are located at respective positions P1 and P2. Side-by-side reclining passenger seats 1 and 2 are provided with reclinable seatbacks 3 and 4, and armrests 5 and 6. The armrests 5 and 6 are attached to the respective sides of the seats 1 and 2. A common armrest 7 is provided to partition the seats 1 and 2. An arm 8 is pivotally fixed through a shaft 8a provided at a first end of the arm 8 to the side of the right seatback 3 in the vicinity of the rear of the armrest 7, so that the arm 8 is made rotatable around the shaft 8a. A display monitor 9 is attached to the second, opposite end of the arm 8. The display monitor 9 can be a liquid crystal display monitor or a flat picture tube. A shock-absorbing member 10 made of a resilient material such as a synthetic rubber and a synthetic fibre is bonded to two adjacent side walls of the display monitor 9.

The display monitor 9 is connected to an operation panel (not shown) provided on the armrest 7. The display monitor 9 has a video signal input terminal (not shown) which is connected to a signal line distributed from a video signal supply line (not shown) under the floor on which the seats 1 and 2 are installed. Alternatively, the display monitor 9 itself can incorporate a tuner and the like.

As will be described in greater detail below, the display monitor 9 together with the shock-absorbing member 10 is rotatably mounted on the second end of the arm 8. A recess 3a is formed in the top of the side of the seatback 3 so that, when the arm 8 is rotated around the shaft 8a, the display monitor 9 is stowed in the recess 3a. When the display monitor 9 is stowed in the recess 3a, the shock-absorbing member 10 is exposed to the outer surface side of the seatback 3 as shown at the position P2 of Figure 1. Another recess 4a is formed in the left seatback 4 at the position symmetrical with the recess 3a. Another display monitor 12 is similarly attached to the seatback 4 which is pivotally fixed through a shaft (not shown) to the side wall of the seatback 4 on which the recess 4a is provided. A shock-absorbing member 13 is also bonded in the adjacent two side walls of the display monitor 12. Accordingly, the display monitor 12 is stowed in the recess 4a so as to oppose the display monitor 9.

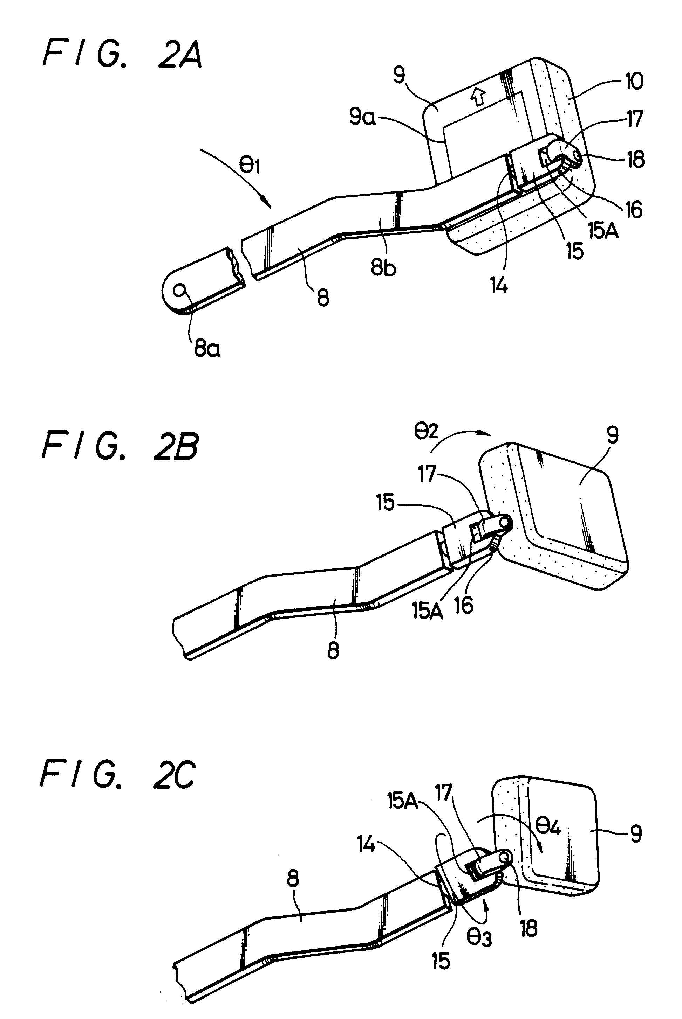

The coupling between the display monitor 9 and the arm 8 will be explained with reference to Figures 2A to 2C. The portion near the second end of the arm 8 is curved towards the passenger side, and a joint 15 is pivotally fixed at a first end thereof to the second end of the arm 8 through a shaft 14, so that the joint 15 can freely rotate in the direction shown by ϑ₃ in Figure 2C.

An attaching member 17 is pivotally fixed at a first end thereof to a shaft 16 inserted across a forked member 15A provided at the second end of the joint 15, in such a manner that the attaching member 17 can freely rotate in the direction shown by ϑ₂ in Figure 2B around the shaft 16. The display monitor 9 is attached through its shock-absorbing member 10 to the second end of the attaching member 17 by a shaft 18.

When the display monitors 9 and 12 are not used, they can be stowed in the recesses 3a and 4a of the seatbacks 3 and 4 as shown at the position P2 of Figure 1. Thus, the display monitors 9 and 12 are not allowed to disturb accessory apparatus, etc. mounted in the armrests 5, 6 and 7.

Moreover, the shock-absorbing members 10 and 13 are respectively bonded to the display monitors 9 and 12 so that, when they are stowed in the recesses 3a and 4a, passengers are protected from injury to their heads. Friction between a side surface of the display monitor 9 and 12 and the upper surface of the recess 3a or 4a prevents the display monitor 9 or 12 from coming down. Alternatively, a simple lock means could be provided (not shown).

When the passenger operates the display monitor 9, the passenger pulls the shock-absorbing member 10 and turns the arm 8 around the shaft 8a in the direction shown by ϑ₁ in Figure 2A, thereby withdrawing the display monitor 9 from the recess 3a. Then, the passenger holds the display monitor 9 and turns the attaching member 17 around the shaft 16 of the joint 15 in the direction shown by ϑ₂ in Figure 2B, thereby turning a display 9a of the display monitor 9 towards the passenger side. In the next step, the passenger turns the display monitor 9 around the shaft 18 in the direction shown by ϑ₄ in Figure 2C, so that the display monitor 9 can be placed at its proper position in which the passenger can watch the video programme in the best viewing position. The display monitor 9 is stabilized because of friction between the shaft 14 and the joint 15, the joint 15 and the attaching member 17, and the shaft 18 and the monitor 9.

The arm 8 and the display monitor 9 pivotally engage each other with three degrees of freedoms (ϑ₂, ϑ₃ and ϑ₄) whereby the passenger can place the display monitor 9 at the optimum viewing position.

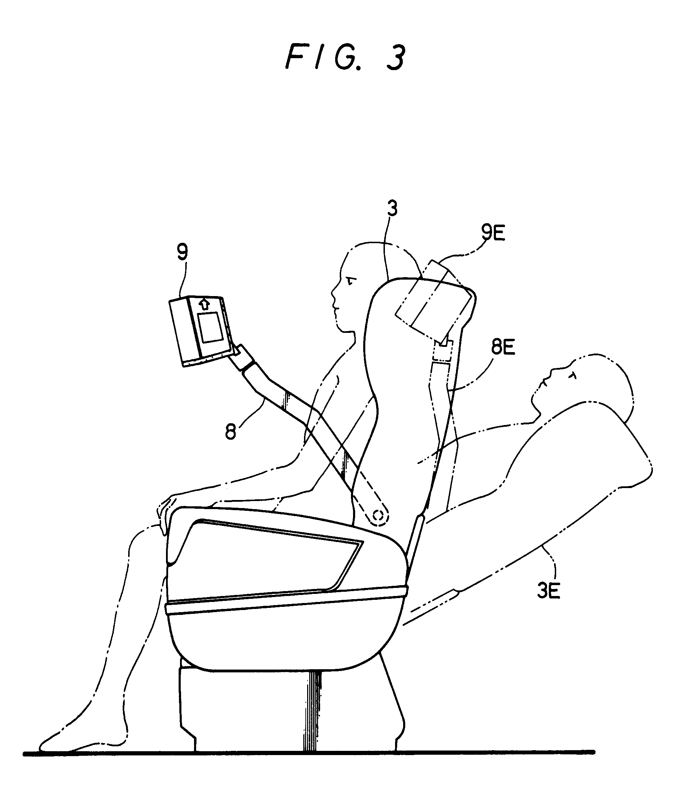

When the display monitor 9 is operated by the passenger, if the seatback 3 is reclined to the position shown by a two-dot chain line 3E in Figure 3, then the display monitor 9 is also rotated through the arm 8 together with the seatback 3, whereby the arm 8 and the display monitor 9 are displaced as shown by two-dot chain lines 8E and 9E in Figure 3. Thus, even when the seatback 3 is reclined, the display monitor 9 can always be kept at the optimum viewing position, in which the passenger can watch the video programme in the best viewing position.

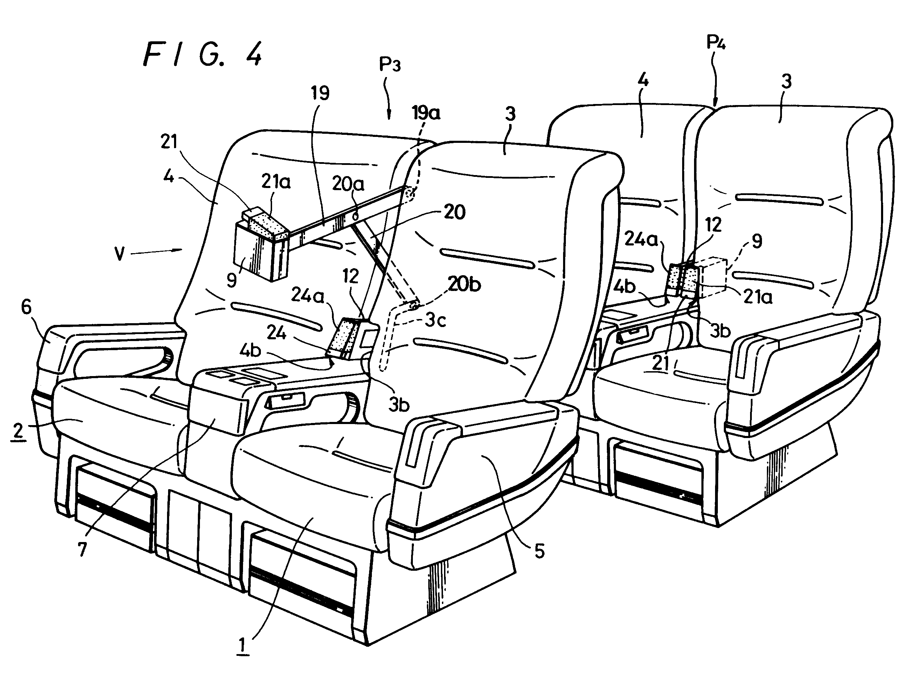

Figure 4 illustrates the second embodiment, in which a pair of seat apparatuses for attaching display monitors are located at positions P3 and P4, respectively. An arm 19 is pivotally fixed at a first end thereof to an upper end of the side of the right reclinable seatback 3 adjacent to the seatback 4 through a shaft 19a so that the arm 19 can rotate around the shaft 19a. The display monitor 9 is pivotally attached to the second end of the arm 19. A stay 20 is pivotally fixed at a first end of the arm 19. A stay 20 is pivotally fixed at the first end 20a thereof to the intermediate portion of the arm 19, and a pin 20b is implanted on the second end of the stay 20. The pin 20b is inserted into a guide groove 3c of an inverted L-shape formed in the side wall of the seatback 3. The pin 20b is engaged with the short leg at the upper end of the guide groove 3c, so that it is prevented from dropping in the direction towards the floor.

A handle 21 is fixed to the side wall of the display monitor 9 through a shock-absorbing member 21a, and a recess 3b is formed in the side of the seatback 3 in the vicinity of the armrest 7. When the engagement between the pin 20b and the protrusion of the guide groove 3c is released, and the pin 20b is slidably moved downward along the guide groove 3c, the display monitor 9 is stowed in the recess 3b. In this case, the shock-absorbing member 21a and the handle 21 are exposed to the outer surface side of the seatback 3 as shown at the position P4 of Figure 4.

A recess 4b is similarly formed in the left seatback 4 at the position corresponding to the recess 3b of the right seatback 3. An arm and a stay (not shown) are similarly fixed to the side of the seatback 4 on which the recess 4b is formed. The display monitor 12 is pivotally fixed to the top of the arm and a handle 24 is fixed to the side of the display monitor 12 through a shock-absorbing member 24a. Accordingly, the display monitor 12 can be stowed in the recess 4b so as to oppose the display monitor 9,

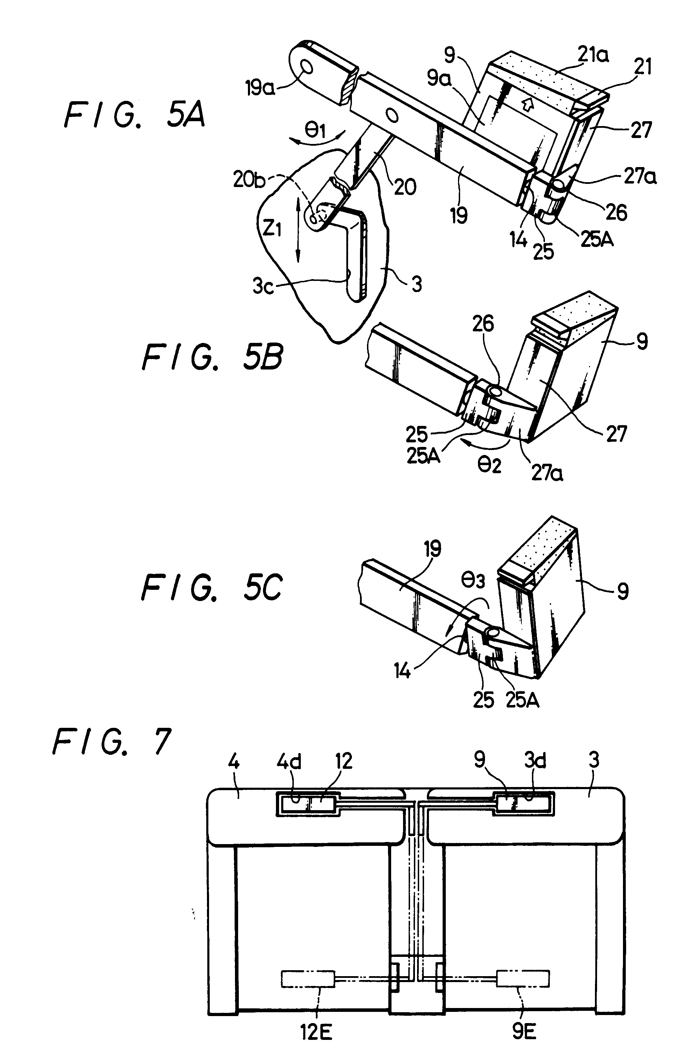

The coupling between the arm 19 and the display monitor 9 will be explained with reference to Figures 5A to 5C. Each of Figures 5A to 5C is an enlarged, perspective view of a main component of the seat apparatus of this embodiment.

A joint 25 is pivotally fixed at a first end thereof to the second end of the arm 19 through the shaft 14 so that it can rotate around the shaft 14 in the direction shown by ϑ₃ in Figure 5C. An engaging portion 27a of a side plate 27 is pivotally fixed through a shaft 26 to a fork 25A at the second end of the joint 25, so that it can rotate around the shaft 26 in the direction shown by ϑ₂ in Figure 5B. The display monitor 9 is fixed to the side plate 27.

When the passenger pulls the handle 21 of the display monitor 9 located at the position P4 in Figure 4 and turns the arm 19 around the shaft 19a in the direction shown ϑ₁ in Figure 5A, the pin 20b is slidably lifted within the guide groove 3c in the Z₁ direction (Figure 5A), engaged with the short leg of the upper end of the guide groove 3c and is stopped at that position. Thereafter, the passenger turns the display monitor 9 around the shaft 26 provided at the second end of the joint 25 in the direction shown by ϑ₂ in Figure 5B, so that the display 9a of the display monitor 9 can be opposed to the passenger. Finally, when the passenger turns the joint 25 around the shaft 14 provided at the second end of the arm 19 in the direction shown by ϑ₃ in Figure 5c, the viewing angle of the display monitor 9 is determined properly, so that the passenger can watch the display 9a of the display monitor 9 in the best viewing position.

The display monitor 9 is provided with the handle 21 so that the passenger can withdraw the display monitor 9 from the recess 3b with ease. Moreover, the display monitor 9 and the arm 19 are rotatably coupled to each other with two degrees of freedoms (ϑ₂ and ϑ₃), so that the passenger simply can adjust the viewing angle of the display monitor 9.

Due to the stay 20 provided in the second embodiment of Figure 4, the apparatus allows a relatively large-sized and heavy display monitor 9 to be attached to the seatback 3 or 4.

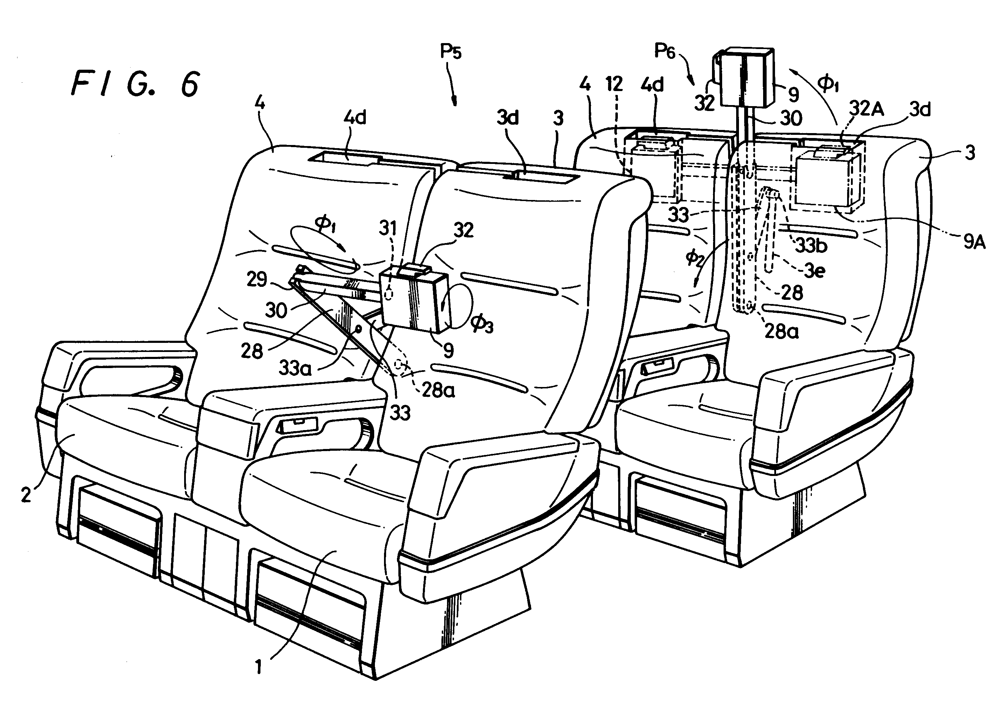

Figure 6 pictorially illustrates the third embodiment, in which a pair of seat apparatuses are located at positions P5 and P6, respectively. An arm 28 is pivotally fixed at a first end thereof to the lower end of a side of the right seatback 3 adjacent to the left seatback in through a shaft 28a. A joint 30 is pivotally fixed at a first end thereof to the second end of the arm 28 through a shaft 29 so that this joint 30 can rotate around the shaft 29 in the direction shown by Φ₁ in Figure 6. The display monitor 9 is pivotally fixed to the second end of the joint 30 through a shaft 31, so that the display monitor 9 can freely rotate around the shaft 31 in the direction shown by Φ₃ in Figure 6. A handle 32 is fixed to one side of this display monitor 9.

A stay 33 is pivotally fixed at a first end 33a thereof to the intermediate portion of the arm 28, and a pin 33b formed at the second end of the stay 33 is inserted into a guide 3e formed in the side wall of the seatback 3.

A recess 3d is formed in the upper end of the seatback in such a manner that the display monitor 9 is stowed within the recesses 3d. When the display monitor 9 is stowed within the recesses 3d at the position P6 as shown by a two-dot chain line 9A in Figure 6, the handle 32 of the display monitor 9 is at the side of the recess 3d, as shown by a two dot chain line 32A of Figure 6. Further, a recess 4d is similarly formed in the upper end of the seatback 4 at a position corresponding to the recess 3d of the seatback 3, and the display monitor 12 is stowed within the recess 4d.

When the passenger pulls out the display monitor 9 stowed within the recess 3d from the position shown by the two-dot chain line 9A of Figure 6, the passenger pulls the handle 32, and turns the display monitor 9 and the joint 30 in the direction shown by Φ₁ in Figure 6 so that the joint 30 and the arm 28 form a straight line. Then, the passenger holds the display monitor 9 and turns the arm 28 around the shaft 28a in the direction shown by Φ₂ to let the stay 33 contact the lower end of the guide groove 3e, whereby the arm 28 is stably held. Thereafter, when the joint 30 is rotated around the shaft 29 in the direction opposite to the direction Φ₁, the display monitor 9 is moved to the optimum viewing position at which the passenger can watch the display screen of the display monitor 9. Moreover, by rotating the display monitor 9 around the shaft 31 in the direction shown by Φ₃ in Figure 6, it is possible to determine the optimum viewing angle of the display monitor 9, so that the passenger can watch the display monitor 9 in the best viewing position.

When the display monitors 9 and 12 are not operated, they are respectively stowed in the recesses 3d and 4d as shown in Figure 7. Thus, accessory apparatus provided on the adjacent seat and in the armrests of the individual passenger seats are not disturbed by the display monitors 9 and 12.

When the display monitors 9 and 12 are operated, they are moved as shown by two-dot chain lines 9E and 12E of Figure 7, whereby they can be located at the positions at which the passenger can watch the display monitors 9 and 12 in the best viewing position.

## Claims

1. A seat apparatus for attaching a display (9) to a seat (1) having a reclinable seatback (3), the apparatus comprising:
an arm (8) having first and second ends and being pivotally fixed at the first end to the seatback (3);
display means (9);
pivot means (14, 15, 16) for attaching the display means (9) to second end of the arm (8); and
a recess (3a) in the seatback (3) for stowing the display means (9).

2. Apparatus according to Claim 1 wherein the pivot means (14, 15, 16,) has multiple degrees of freedom whereby the display means (9) can be positioned for optimum viewing with respect to the position of the viewer.

3. Apparatus according to Claim 2 wherein the pivot means (14, 15, 16) has three degrees of freedoms so that the display means (9) can be rotated around a first axis along the arm (8), around a second axis perpendicular to the first axis, and around a third axis perpendicular to the first and second axes.

4. Apparatus according to Claim 1 wherein the arm (8) is pivotally attached to a lower side of the seatback (3), and the recess (3a) is formed at an upper side of the seatback (3).

5. Apparatus according to any one of the preceding claims wherein the display means (9) is a liquid crystal display (9).

6. Apparatus according to any one of the preceding claims further comprising a stay (20) having a first end slidably connected with a slide of the seatback (3) and a second end which is pivotally attached to a point on the arm (19) which is intermediate between its first and second ends.

7. Apparatus according to Claim 6 wherein the arm (28) is a folding arm (28).

8. Apparatus according to any one of the preceding claims wherein the recess (3d) is formed in the top of the seatback (3).

9. Apparatus according to any of Claim 1 to 7 wherein the recess (3a) is formed in the side of the seatback (3).

10. Apparatus according to any one of claim 1 to 7 wherein the seatback (3) has a headrest and the recess (3d) is formed at the top of the seatback (3) and behind the headrest.

11. A seat apparatus for attaching a display (9) to a pair of side-by-side reclining seats (1, 2) each having a seatback (3, 4) such that one side of one seatback (3,4) opposes a side of the other seatback (3, 4), the apparatus comprising:
a pair of arms (8, 11) each having first and second ends with the first ends being pivotally fixed to the opposing sides of the seatbacks (3, 4), respectively;
a pair of display means (9, 12) respectively attached to the second ends of the pair of arms (8, 11); and
a pair of recesses (3a, 4a) formed in the opposing sides of the seatbacks (3, 4), respectively, for stowing the displays (9, 12) when not in use.

12. Apparatus according to Claim 11 further comprising pivot means (14, 15, 16) for pivotally attaching the pair of display means (9, 12) to the respective second ends of the pair of arms (8, 11).

13. Apparatus according to Claim 11 or Claim 12 wherein the pair of recesses (3d, 4d) are respectively formed in the tops of the opposing sides of the seatbacks (3, 4).

14. Apparatus according to Claim 11, Claim 12 or Claim 10 further comprising an armrest (7) provided between the pair of seats (3, 4)

15. Apparatus according to any one of claim 1 to 6 or 11 to 14 wherein each of the arm or arms is a single arm (8, 11).

16. Apparatus according to any one of the preceding claims further comprising shock-absorbing means (13) surrounding the display means (9, 12) on at least two sides thereof.

## Patentansprüche

1. Vorrichtung zur Befestigung einer Anzeige (9) an einem Sitz (1) mit verstellbarer Rückenlehne (3), wobei die Vorrichtung umfaßt:
- einen Arm (8) mit einem ersten und einem zweiten Ende, der mit seinem ersten Ende schwenkbar an der Rückenlehne (3) befestigt ist,
- Anzeigemittel (9),
- Schwenkmittel (14, 15, 16) zum Anbringen des Anzeigemittels (9) am zweiten Ende des Armes (8) sowie
- eine Vertiefung (3a) in der Rückenlehne (3) zur Unterbringung des Anzeigemittels (9).

2. Vorrichtung nach Anspruch 1, bei der das Schwenkmittel (14, 15, 16) mehrere Freiheitsgrade aufweist, wodurch das Anzeigemittel (9) so positionierbar ist, daß sich in bezug auf die Position des Zuschauers eine optimale Sicht ergibt.

3. Vorrichtung nach Anspruch 2, bei der das Schwenkmittel (14, 15, 16) drei Freiheitsgrade aufweist, so daß das Anzeigemittel (9) drehbar ist um eine erste Achse in Längsrichtung des Armes (8), um eine zweite, zur ersten senkrechte, Achse, sowie um eine dritte zur ersten und zweiten senkrechte Achse.

4. Vorrichtung nach Anspruch 1, bei der der Arm (8) schwenkbar an einer Unterseite der Rückenlehne (3) angebracht ist, und bei der eine Vertiefung (3a) an der Oberseite der Rückenlehne (3) ausgebildet ist.

5. Vorrichtung nach einem der vorhergehenden Ansprüche, bei der das Anzeigemittel (9) eine Flüssigkristall-Anzeige (9) ist.

6. Vorrichtung nach einem der vorhergehendenen Ansprüche, die weiterhin eine Stütze (20) aufweist, deren eines Ende verschiebbar mit einer Gleitvorrichtung an der Rückenlehne (3) verbunden ist und deren anderes Ende an einem Punkt des Armes (19) zwischen dessen erstem und zweitem Ende schwenkbar angebracht ist.

7. Vorrichtung nach Anspruch 6, bei der der Arm (28) als klappbarer Arm (28) ausgebildet ist.

8. Vorrichtung nach einem der vorhergehenden Ansprüche, bei der die Vertiefung (3d) an der Oberseite der Rückenlehne (3) ausgebildet ist.

9. Vorrichtung nach einem der Ansprüche 1 bis 7, bei der die Vertiefung (3a) an der Seite der Rückenlehne (3) ausgebildet ist.

10. Vorrichtung nach einem der Ansprüche 1 bis 7, bei der die Rückenlehne (3) eine Kopfstütze aufweist, und bei der die Vertiefung (3d) an der Oberseite der Rückenlehne (3) und hinter der Kopfstütze ausgebildet ist.

11. Vorrichtung zur Befestigung einer Anzeige (9) an einem Paar nebeneinander angeordneter verstellbarer Sitze (1, 2) mit jeweils einer Rückenlehne (3, 4), so daß eine Seite einer Rückenlehne (3, 4) gegenüber einer Seite der anderen Rückenlehne (3, 4) angeordnet ist, wobei diese Vorrichtung umfaßt
- zwei Arme (8, 11), die jeweils ein erstes und ein zweites Ende aufweisen, wobei die ersten Enden an einer der gegenüberliegenden Seiten der Rückenlehne (3) bzw. der Rückenlehne (4) schwenkbar befestigt sind,
- zwei Anzeigemittel (9, 12), die an dem zweiten Ende des Armes (8) bzw. des Armes (11) angebracht sind, sowie
- zwei Vertiefungen (3a, 4a), die an einer der gegenüberliegenden Seiten der Rückenlehne (3) bzw. der Rückenlehne (4) ausgebildet sind und zur Aufnahme der Anzeigemittel (9, 12) dienen, wenn diese nicht benützt werden.

12. Vorrichtung nach Anspruch 11, die weiterhin Schwenkmittel (14, 15, 16) zur schwenkbaren Anbringung der beiden Anzeigemittel (9, 12) am zweiten Ende des Armes (8) bzw. des Armes (11) aufweist.

13. Vorrichtung nach Anspruch 11 oder 12, bei der die beiden Vertiefungen (3d, 4d) an der Oberseite der Rückenlehne (3) bzw. der Rückenlehne (4) ausgebildet sind.

14. Vorrichtung nach Anspruch 11, 12 oder 13, die weiterhin eine Armlehne (7) zwischen den beiden Sitzen (3, 4) aufweist.

15. Vorrichtung nach einem der Ansprüche 1 bis 6 oder 11 bis 14, bei der die Arme als einteilige Arme (8, 11) ausgebildet sind.

16. Vorrichtung nach einem der vorhergehenden Ansprüche, die weiterhin Stoßdämpfungsmittel (13) umfaßt, welche die Anzeigemittel (9, 12) an mindestens zwei Seiten umgeben.

## Revendications

1. Dispositif pour attacher un affichage (9) à un siège (1) qui possède un dossier inclinable (3), le dispositif comprenant :
- un bras (8) présentant une première extrémité et une seconde extrémité, et étant fixé en pivotement à la première extrémité sur le dossier (3);
- des moyens d'affichage (9);
- des moyens de pivotement (14, 15, 16) pour attacher les moyens d'affichage (9) à la seconde extrémité du bras (8); et
- un évidement (3a) dans le dossier (3) pour ranger les moyens d'affichage (9).

2. Appareil selon la revendication 1, dans lequel les moyens de pivotement (14, 15, 16) présentent des degrés de liberté multiples grâce à quoi les moyens d'affichage (9) peuvent être placés pour une observation optimale par rapport à la position de l'observateur.

3. Dispositif selon la revendication 2, dans lequel les moyens de pivotement (14, 15, 16) ont trois degrés de liberté de sorte que les moyens d'affichage (9) peuvent tourner autour d'un premier axe le long du bras (8), autour d'un second axe perpendiculaire au premier axe, et autour d'un troisième axe perpendiculaire au premier et au second axe.

4. Dispositif selon la revendication 1, dans lequel le bras (8) est attaché en pivotement sur un côté inférieur du dossier (3), et l'évidement (3a) est formé à un côté supérieur du dossier (3).

5. Dispositif selon l'une quelconque des revendications précédentes, dans lequel les moyens d'affichage (9) sont un affichage (9) à cristaux liquides.

6. Dispositif selon l'une quelconque des revendications précédentes et comprenant en outre une jambe (20) ayant une première extrémité reliée en coulissement à une glissière du dossier (3) et une seconde extrémité qui est attachée en pivotement sur un point du bras (19) intermédiaire entre sa première extrémité et sa seconde extrémité.

7. Dispositif selon la revendication 6, dans lequel le bras (28) est un bras pliant (28).

8. Dispositif selon l'une quelconque des revendications précédentes, dans lequel l'évidement (3d) est formé dans le sommet du dossier (3).

9. Dispositif selon l'une quelconque des revendications 1 à 7, dans lequel l'évidement (3a) est formé dans le côté du dossier (3).

10. Dispositif selon l'une quelconque des revendications 1 à 7, dans lequel le dossier (3) comporte un appui-tête et l'évidement (3d) est formé au sommet du dossier (3) et derrière l'appui-tête.

11. Dispositif pour attacher un affichage (9) à une paire de sièges inclinables (1, 2) côte-à-côte qui ont chacun un dossier (3, 4) de telle manière qu'un côté d'un dossier (3, 4) est à l'opposé d'un côté de l'autre dossier (3, 4), le dispositif comprenant :
- une paire de bras (8, 11) ayant chacun une première extrémité et une seconde extrémité, les premières extrémités étant fixées en pivotement sur les côtés opposés des dossiers (3, 4) respectivement;
- une paire de moyens d'affichage (9, 12) attachés respectivement aux secondes extrémités de la paire de bras (8, 11);
- une paire d'évidements (3a, 4a) formés dans les côtés opposés des dossiers (3, 4) respectivement, afin de ranger les affichages (9, 12) lorsqu'ils ne sont pas en service.

12. Dispositif selon la revendication 11, comprenant en outre des moyens de pivotement (14, 15, 16) afin d'attacher en pivotement la paire de moyens d'affichage (9, 12) sur les secondes extrémités respectives de la paire de bras (8, 11).

13. Dispositif selon la revendication 11 ou 12, dans lequel la paire d'évidements (3d, 4d) sont respectivement formés dans les sommets des côtés opposés des dossiers (3, 4).

14. Dispositif selon l'une des revendications 11, 12 ou 10, comprenant en outre un accoudoir (7) prévu entre la paire de sièges (3, 4).

15. Dispositif selon quelconque des revendications 1 à 6, ou 11 à 14 dans lequel chacun des bras est un bras unique (8, 11).

16. Dispositif selon l'une quelconque des revendications précédentes, comprenant en outre des moyens d'amortissement (13) qui entourent les moyens d'affichage (9, 12) sur au moins deux côtés de ceux-ci.
